# EUROPEAN PATENT APPLICATION

(11) **EP 4 714 729 A1**
(43) Date of publication of application: **25.03.2026**
(21) Application number: 25191560.9
(22) Date of filing: 24.07.2025
(51) Int. Cl.: B60L 53/302, B60L 53/50, B60L 53/53, B60L 53/57, B60L 3/12, B60L 53/14, B60L 58/26, B60L 1/00, B60H 1/00, H01M 10/48, H01M 10/613, H01M 10/625, H01M 10/633, H01M 10/635, H01M 10/6563, H01M 10/6568, H01M 10/66, H02J 7/65

(54) **MOBILE CHARGING SYSTEM AND METHOFD OF CONTROLLING THE THERMAL MANAGEMENT SYTEM OF SUCH**

(30) Priority: 24.09.2024 US 202418894705
(71) Applicant: Deere & Company, Moline, IL 61265 (US)
(72) Inventor: KENNEDY, THOMAS L, 68163 Mannheim (DE); WHALEN, AARON J, 68163 Mannheim (DE); VILAR, ERIC, 68163 Mannheim (DE)
(74) Representative: Reichert, Christian

(57) **Abstract**

A mobile charging system (100) having a thermal management system (120) is disclosed. The mobile charging system further comprising: a location system (208); a battery (119) and a heat exchanger (122) of the thermal management system (120), the heat exchanger (122) being positioned on a towed vehicle (104) of the mobile charging system (100); at least one processor (302); and a memory (304) coupled with the processor (302), the memory (304) including instructions that when executed by the processor (302) cause the mobile charging system (100) to: determine whether a ground travel speed of the mobile charging system (100), as determined using at least information provided by the location system (208), satisfies a predetermined ground travel speed threshold; generate a signal to facilitate an operation, based at least on the ground travel speed not satisfying the predetermined ground travel speed threshold, of the thermal management system (120) in a first, high power mode at which at least an impeller (124) of the thermal management system (120) is operated using an electrical power provided by the battery (119) of the mobile charging system (100) to control a temperature of at least the heat exchanger (122); and generate a signal to facilitate an operation, based at least on the ground travel speed satisfying the predetermined ground travel speed threshold, of the thermal management system (120) in a second, low power mode at which at least the impeller (124) is not operated using the electrical power provided by the battery (119) and wherein the temperature of at least the heat exchanger (122) is controlled using at least a flow of a ram air across the heat exchanger (122). Furthermore, a method for selectively controlling the thermal management system of the mobile charging system (100) is disclosed.

## Description

### TECHNICAL FIELD

The present disclosure generally relates to thermal management systems, and more particularly, but not exclusively, to selectively controlling an operation of components of a thermal management system to reduce power consumption.

### BACKGROUND

Certain loads utilized with the operation of vehicles, including agricultural and construction equipment, can utilize both active heating and cooling systems to control a temperature of the load(s). For example, internal and external battery systems of electric vehicles, including battery systems provided by mobile charging stations, can utilize heating and cooling systems to control a temperature of the one or more batteries of the associated battery system. Moreover, such heating and cooling systems can assist with the batteries being maintained at temperatures at which the batteries can be charged, as well as discharged, at certain current levels that can support or satisfy various functions of the electric vehicle. Often, however, the operation of certain components of such heating and cooling systems can utilize power that is stored by such batteries.

### SUMMARY

The present disclosure may comprise one or more of the following features and combinations thereof.

In one embodiment of the present disclosure, a method is provided for selectively controlling a thermal management system of a mobile charging system. The method can include determining a ground travel speed of the mobile charging system satisfies a predetermined ground travel speed threshold. Further, based at least on the ground travel speed not satisfying the predetermined ground travel speed threshold, the thermal management system can be operated in a first, high power mode at which at least an impeller of the thermal management system is operated using an electrical power provided by a battery of the mobile charging system to facilitate a cooling of a temperature of an air side heat exchanger. Additionally, based at least on the ground travel speed satisfying the predetermined ground travel speed threshold, the thermal management system can be operated in a second, low power mode at which at least the impeller is not operated using the electrical power provided by the battery and wherein the temperature of the air side heat exchanger is controlled using at least a flow of a ram air across the air side heat exchanger.

In another embodiment, a method is provided for selectively controlling a thermal management system of a mobile charging system. The method can include determining whether a ram air that is to be selectively supplied to cool a heat exchanger of the thermal management system satisfies at least one predetermined ram air threshold. Additionally, based at least on the ram air not satisfying the predetermined ram air threshold, the thermal management system can be operated in a first, high power mode at which at least an impeller of the thermal management system operates using an electrical power provided by a battery of the mobile charging system to facilitate a cooling of a temperature of the heat exchanger. Further, based at least on the ram air satisfying the predetermined ram air threshold, the thermal management system can be operated in a second, low power mode at which at least the impeller is not operated using the electrical power provided by the battery and wherein the temperature of the heat exchanger is reduced via a flow of the ram air across the heat exchanger.

In another embodiment, a system of a mobile charging system having a thermal management system is provided that includes a location system, and a battery and a heat exchanger of the thermal management system, the heat exchanger being positioned on a towed vehicle of the mobile charging system. The system can also include at least one processor and a memory coupled with the processor, the memory including instructions that when executed by the processor cause the system to determine whether a ground travel speed of the mobile charging system, as determined using at least information provided by the location system, satisfies a predetermined ground travel speed threshold. The memory can further include instructions that when executed by the processor can cause the system to generate a signal to facilitate an operation, based at least on the ground travel speed not satisfying the predetermined ground travel speed threshold, of the thermal management system in a first, high power mode at which at least an impeller of the thermal management system is operated using an electrical power provided by the battery of the mobile charging system to control a temperature of at least the heat exchanger. Additionally, the memory can further include instructions that when executed by the processor can cause the system to generate a signal to facilitate an operation, based at least on the ground travel speed satisfying the predetermined ground travel speed threshold, of the thermal management system in a second, low power mode at which at least the impeller is not operated using the electrical power provided by the battery and wherein the temperature of at least the heat exchanger is controlled using at least a flow of a ram air across the heat exchanger.

These and other features of the present disclosure will become more apparent from the following description of the illustrative embodiments.

### BRIEF DESCRIPTION OF THE FIGURES

The disclosure described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
Figure 1 illustrates a simplified exemplary representation of a mobile charging system.
Figures 2A and 2B illustrate an exemplary gate in open and closed positions, respectively.
Figures 3 and 4 illustrate exemplary thermal management systems configured for use with at least a mobile charging station.
Figure 5 illustrates an exemplary method for selectively controlling an operating of one or more components of a thermal management system.

### DETAILED DESCRIPTION OF THE ILLUSTRATIVE EMBODIMENTS

The following Detailed Description refers to the accompanying drawings that illustrate exemplary embodiments. Other embodiments are possible, and modifications can be made to the embodiments within the spirit and scope of this description. Those skilled in the art with access to the teachings provided herein will recognize additional modifications, applications, and embodiments within the scope thereof and additional fields in which embodiments would be of significant utility. Therefore, the Detailed Description is not meant to limit the embodiments described below.

In the Detailed Description herein, references to "one embodiment," an "embodiment," and "example embodiment," etc., indicate that the embodiment described may include a particular feature, structure, or characteristic, by every embodiment may not necessarily include the particular feature, structure, or characteristic. Moreover, such phrases are not necessarily referring to the same embodiment. Further, when a particular feature, structure, or characteristic may be described in connection with an embodiment, it may be submitted that it may be within the knowledge of one skilled in art to affect such feature, structure, or characteristic in connection with other embodiments whether or not explicitly described.

As battery-operated electric agriculture and construction vehicles and equipment become more prevalent, the use of mobile charging units containing batteries can become more prevalent. To meet the charging and discharging requirements of the mobile charging unit, the internal battery requires appropriate thermal management (e.g., temperature control). However, a thermal management system of a mobile charger unit can consume electrical power from the battery of a mobile charging unit. Yet, to preserve the state of charge of the mobile charger unit, increasing the efficiency of the thermal management system is important. Therefore, embodiments discussed herein can provide an approach to selectively utilizing ram air, rather than an electrically powered impeller, to force air across an air side heat exchanger of a thermal management system in connection with cooling a cooling medium. By using ram air, power stored by the battery that would otherwise be used to power an impeller can be conserved. Selective use of ram air can be based, at least in part, on certain thresholds being satisfied, including, for example, a ground travel speed, as may be determined via information from a location system. Such an approach can include calculating an amount of ram air that is being delivered from cooling the air side heat exchanger. Moreover, such selective use of ram air can be in connection with the thermal management system reducing energy consumption by the thermal management system.

According to certain embodiments, as a mobile charging system, including, for example, a towed vehicle that can include the mobile charger unit travels, a thermal management controller can monitor the ground travel speed of the mobile charging system using location system, such as, for example, using a global positioning satellite (GPS) signal from a GPS receiver. The thermal management controller can be configured to use such information to determine if there is ram air, or ram air that satisfies predetermined thresholds, to be delivered for the air side heat exchanger. If there is sufficient ram air, the thermal management controller can generate one or more signals to modify thermal controls accordingly to lower the power required to maintain system temperatures.

Thus, for example, in certain situations, when the thermal management controller detects that the mobile charger unit is in motion, the thermal management controller can deactivate an electrically powered impeller. Conversely, if ram air is not present for delivery to the air side heat exchanger, and/or does not have certain characteristics to satisfy one or more predetermined thresholds, the thermal management controller can activate, or retain activation of, the impeller.

In certain instances in which a supply of ram air has ceased, or dropped below predetermined thresholds, the thermal management controller can at least temporarily deactivate one or more pumps, compressors, evaporators, and/or impellers. In certain situations, following such a temporary deactivation of one or more components of the thermal management system, in response to the thermal management controller detecting that the mobile charger system is in, or has resumed travel, the thermal management controller can generate one or more signals to reactivate the pumps, compressors, and evaporators to maintain the appropriate temperature for the mobile charger unit.

Additionally, if a mobile charging unit of the mobile charging system has been in a temporary storage condition where the mobile charging unit has not been maintaining a desired temperature for the thermal management system and/or cooling medium, the thermal management controller can place the thermal management system in an energy saving mode that can delay any active use of the impeller until absolutely required. However, in such a situation, the thermal management controller can be configured to, if the thermal management controller detects movement of the mobile charging system resulting in ram air, and/or the ram air satisfies one or more predetermined thresholds, generate one or more signals to activate appropriate devices to control the operation of thermal management system, including with respect to the temperature of the thermal management system and/or cooling medium. Such devices could therefore include, for example, one or more pumps, compressors, evaporators, and/or impellers, among other devices.

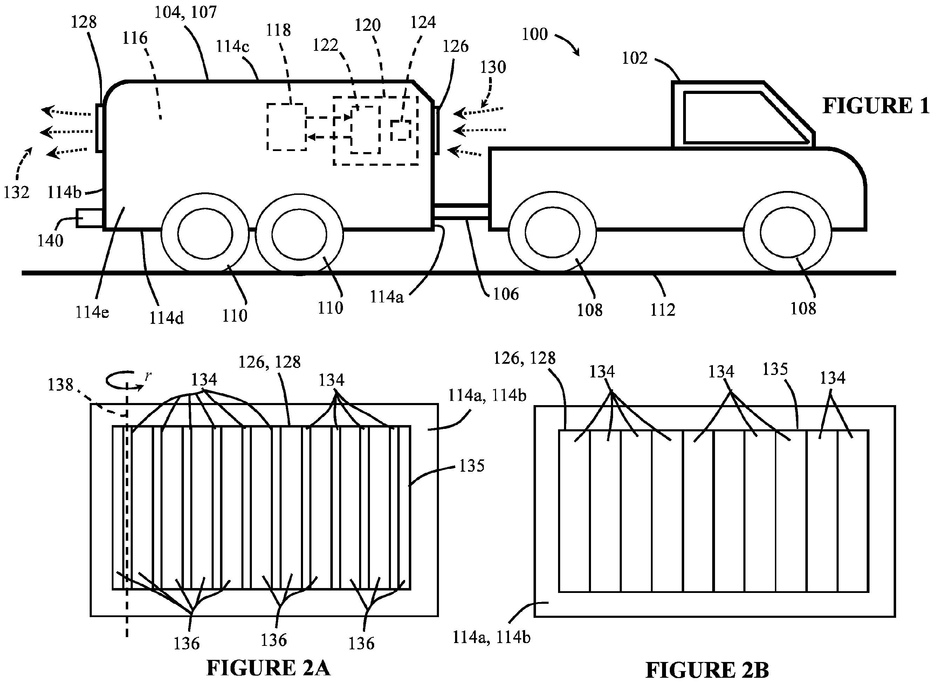

Figure 1 illustrates a simplified exemplary representation of a mobile charging system 100. The illustrated mobile charging system 100 is depicted as including a vehicle 102 that is coupled via a hitch 106 to a towed vehicle 104, which in this example, is a mobile charging unit 107. However, the mobile charging unit 107 can be a portion of a towed vehicle 104 that is used in connection with towing and/or storing other items or equipment. For example, according to certain embodiment, the towed vehicle 104 can be an equipment trailer or skid trailer that, in addition to having the mobile charging unit 107, includes areas for other tools, equipment, and/or vehicles, among other items.

As shown, both the vehicle 102 and the towed vehicle 104 include a plurality of ground engagement bodies 108, 110, such as, for example, wheels, tires, or tracks, as well as various combinations thereof, among other types of ground engagement bodies that are configured to engage with a ground surface 112. While the vehicle 102 is depicted in Figure 1 as an automobile, and, moreover, a truck, the vehicle 102 can have a variety of different types of configurations, including, for example, be other types of automobiles, as well as being an agricultural vehicle, such as, for example, a tractor, windrower, harvester, or bailer, among other agricultural vehicles. Additionally, or alternatively, the vehicle 102 can be a piece of construction equipment, including, for example, but not limited to, dozers, crawlers, and motor graders, among other types of equipment.

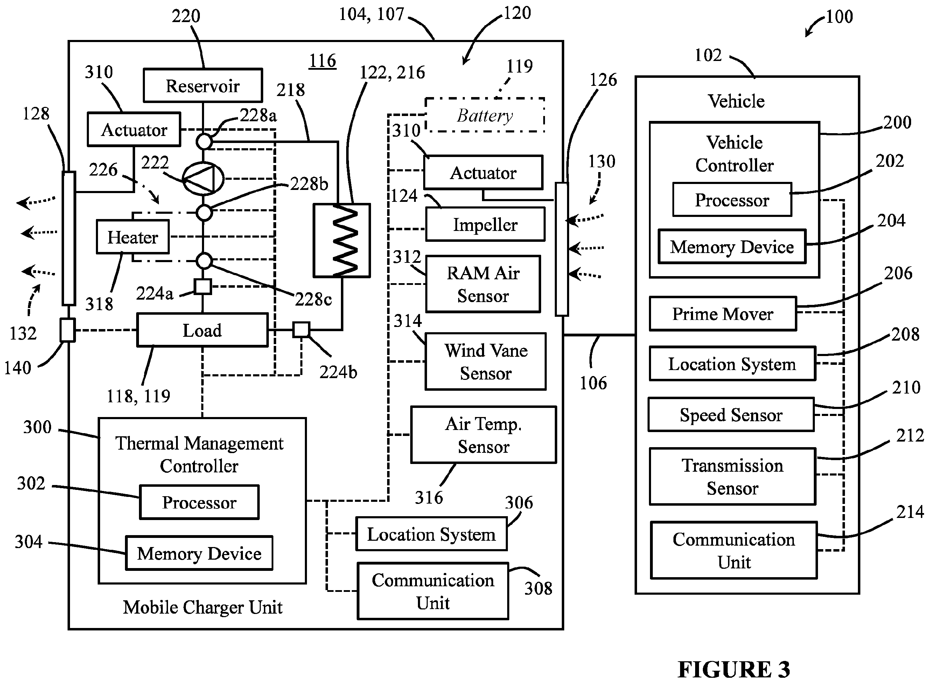

The illustrated towed vehicle 104 is configured as a mobile charging unit 107 that includes a front wall 114a, rear wall 114b, top wall 114c, bottom wall 114d, and a first sidewall 114e and an opposing second sidewall (not shown). The walls and sidewalls 114a-e can generally define an interior area 116 of the towed vehicle 104 that can house one or more loads 118, such as, for example, one or more batteries 119 (Figure 3), among other loads. The interior area 116 can further include a thermal management system 120 that can include at least one or more air side heat exchangers 122 and an impeller 124, such as, for example, a fan. While the thermal management system 120 is discussed below in connection with use with an interior area of a towed vehicle 104, the management system 120 can be used in a variety of other applications, including, for example, be, or be part of, a thermal management system of a vehicle 102, among other applications.

The thermal management system 120 can further be configured to control an air flow through the interior area 116, including into and out of the interior area 116, via one or more front and/or rear vents 126, 128 of the towed vehicle 104. For example, referencing Figures 1-2B, a front vent(s) 126 can include one or more openings 135 that can provide a ram air inlet though which ram air 130 can be directed to flow over at least one air side heat exchanger 122 in the interior area 116, while the rear vent(s) 128 can include one or more openings 135 through which at least a portion of the ram air that entered into the interior area 116 can exit the interior area 116 as an exhaust 132. The thermal management system 120 can also control the operation of one or more gates 134, including, for example, louvers, that can be utilized to open or close the associated opening(s) 135 of the front or rear vents 126, 128. For example, as seen in Figure 2A, the gate 134 can, according to certain embodiments, be provided by one or more louvers that can be rotatably displaced, such as, for example, via operation of an actuator 310 (Figure 3) from an open position (Figure 2A) to a closed position (Figure 2B). According to the illustrated example, selective operation of the actuator 310, including, for example, an electric motor, can displace the gates 134 between the open and closed positions, as well as positions therebetween. For example, as illustrated, according to certain embodiments in which a gate 134 comprises one or more louvers, each louver can be rotatably displaceable in a first direction (as generally indicated by "*r*" in Figure 2A) about an axis 138 such that the louver can be displaced from an open position (Figure 2A) to a closed position (Figure 3), or a position therebetween. In this example, the axis 138 is illustrated as extending generally in the vertical direction, but can extend in a variety of different directions, including, for example, a horizonal direction, as well as a direction between the vertical and horizontal directions. When the gate 134 of the front vent 126 is at the fully open position Figure 2A, the gate 134 of the front vent 126 can be positioned to generally not interfere, or provide reduced or minimal interference, with the flow of ram air 130 into the interior area 116. For example, according to the illustrated embodiment in which the gate 134 comprises a plurality of louvers, when at the open position, air can flow through spaces 136 between the louvers and into the interior area 116. Similarly, when the gate 134 of the rear vent 128 is at the fully open position, the gate 134 of the rear vent 128 can be positioned to generally not interfere, or provide reduced or minimal interference, with the flow of the exhaust 132 from the interior area 116. Conversely, when the gate 134 of the front vent 126 is at the fully closed position (Figure 2B), the gate 134 of the front vent 126 may be positioned to prevent, inhibit, or accommodate reduced or minimal, flow of ram air 130 into the interior area 116. Similarly, when the gate 134 of the rear vent 128 is at the fully closed position, the gate 134 of the rear vent 128 may be positioned to prevent, inhibit, or accommodate reduced or minimal, flow of the exhaust 132 from the interior area 116.

The gate 134 can also be selectively positioned between the open and close positions to control an amount of associated ram air 130 that flows into, or exhaust 132 that flows out of, the interior area 116. Further, according to certain embodiments, the gates 134 of either or both the front and rear vents 126 can be selectively positioned to at least assist in direction of flow of the ram air 130 into, or the exhaust 132 out of, the interior area 116, respectively.

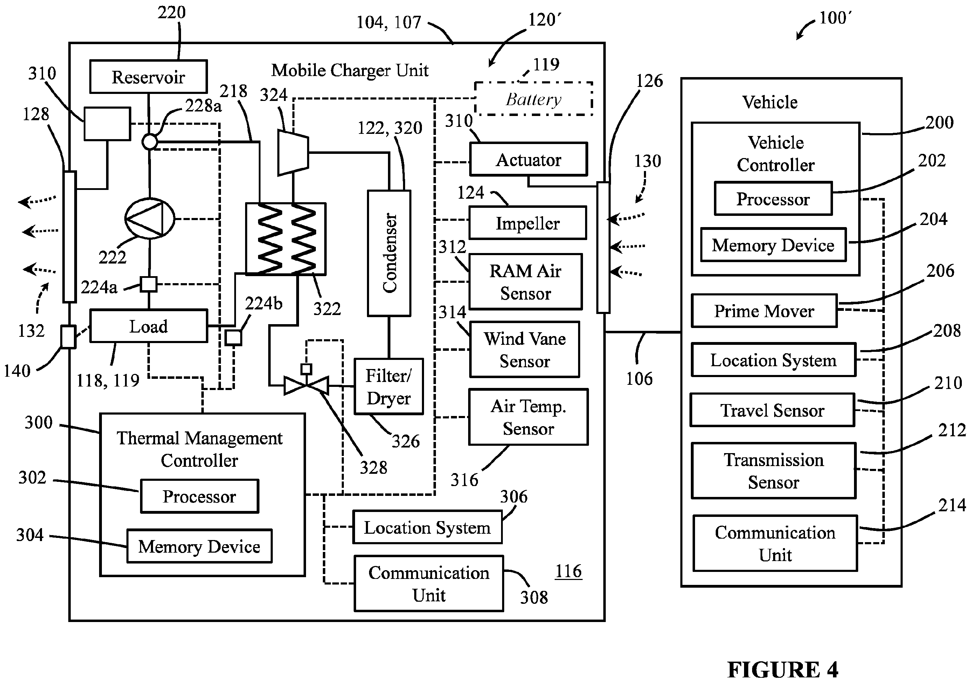

A variety types of devices, systems, or components, as well as combinations thereof, can provide the load 118. Additionally, although a single load 118 is illustrated, the thermal management system 120 can include a plurality of loads 118. For example, according to certain embodiments, the load 118 can comprise one or more batteries 119. Additionally, or alternatively, the one or more batteries 119 can be separate from, or in addition to, the load 118, as shown by the battery 119 illustrated in broken line format 119 in Figures 3 and 4. Thus, the thermal management system 120 can be utilized in to control the temperature of one or more loads 118 of one or more systems of the vehicle 102 and/or mobile charging station 100, including, but not limited to, a battery system, engine system, transmission system, brake system, and power electronics systems, as well as combinations thereof, among other systems, devices, or components. Thus, while Figure 3 illustrates a single load 118, which, as mentioned above, can, for example, be one or more batteries 119, additionally, or alternatively, the load 118 can include an engine/motor, brakes, power electronic device, or transmission, among other loads. Further, while Figure 3, as well as Figure 4, illustrate, for at least purposes of illustration, simplified representations of exemplary thermal management systems 120, 120', a variety of other types and/or configurations of thermal management systems can be utilized with embodiments of the subject disclosure.

According to the illustrated example in which the towed vehicle 104 is a mobile charging unit 107, the mobile charging unit 107 can further include a charge port 140 that can be in electrical communication with the battery 119, which, again, may, or may not, provide one or more loads 118 for the thermal management system 120, as discussed above. Thus, according to such embodiments, the mobile charging system 100 can be configured to travel to various locations at which the electrical systems, including batteries, of other electrically operated equipment, can be charged, or recharged by power supplied by the battery(ies) 119 of the mobile charging unit 107 104. Moreover, for example, the mobile charging system 100 can be configured to travel to various locations at which the batteries of battery powered equipment, including, but not limited to, electric vehicles in the form of agricultural and construction equipment, among others, can be electrically coupled to the battery 119 of the mobile charging system 100 via the charge port 140. With the battery 119 electrically coupled to the battery of another battery system, electrical power from the battery 119 can be used to charge the battery(ies) of the other battery system(s). Additionally, the charge port 140 can also be used in connection with the charging of the battery 119. For example, the charge port 140 can provide an interface that can be used in connection with an electrical coupling of the battery 119 to a utility power source such that electrical power from the utility power source can be provided for charging the battery 119.

Figures 3 illustrates an exemplary thermal management system 120 configured for use with at least a mobile charging station 104. The illustrated thermal management system 120 is configured for a cooling fluid to circulate between components or devices of the thermal management system 120 through a one or more conduits 218, including tubes or pipes, as well as combinations thereof, as well as the associated fittings and couplings. A variety of different types of cooling mediums can be circulated about the thermal management system 120, including, but not limited to, glycol/water solutions, dielectric cooling fluids, mineral oil, and refrigerants, among other cooling mediums. Further, the thermal management system 120 illustrated in Figure 3, as well as other thermal management systems, can include a variety of other components or devices in addition to those shown and discussed herein, including, but not limited to, heaters, heat exchangers, radiators, filters, control valves, and/or relief vales, as well as combinations thereof.

As seen in Figure 3, the illustrated thermal management system 120, which in this example, can be a liquid based cooling system, can include a reservoir 220. To the extent necessary, the reservoir 220 can assist in replenishing at least a portion of the cooling medium that is circulating through at least the conduits 218. Additionally, or alternatively, to the extent needed, the reservoir 220 can also provide an outlet for a flow, including an overflow, of the cooling medium or associated gases that may be at least occasionally present within at least a portion of the thermal management system 120 as the cooling medium is heated or overheated. The flow of cooling medium to, or from the reservoir 220 can be controlled in a variety of manners, including, for example, via a valve 228a.

According to the illustrated embodiment, the thermal management system 120 can include at least one pump 222 configured to facilitate a flow of the cooling medium to the one or more loads 118 for a transfer heat from the load 118 to the cooling medium in a manner that can maintain the load 118 at or around the temperature requirements for that load 118. The temperature of the cooling medium entering the load 118 can be determined, for example, using an inlet temperature sensor 224a. Similarly, the temperature of the cooling medium exiting the load 118 can be determined, for example, using an outlet temperature sensor 224b. Further, information provided by a temperature differential across the load 118, as provided by a comparison of the temperature information provided by the inlet and outlet temperature sensors 224a, 224b can directly, or indirectly, be used to derive other information regarding the characteristics of the cooling medium and/or the operation of the pump 222.

During normal operating conditions, following heat from the load 118 being transferred to the cooling medium that has been circulated to the load 118, the heated cooling medium can be circulated to at least one air side heat exchanger 122, which, in the example, shown in Figure 3, can be a radiator 216. In at least certain situations, an impeller 124, including, for example, a fan, can be utilized to circulate air across the radiator 216 in a manner in which heat entrained in the cooling medium can be transferred to the flowing air. Alternatively, as discussed below, in at least certain situations, the impeller 124 can be deactivated, and the air flow can instead be provided by ram air 130 that can selectively be allowed to enter into the interior area 116 of the towed vehicle 104 via at least partial opening of the one or more gates 134, as discussed above. The cooled cooling medium that is outputted from the air side heat exchanger 122 (e.g., radiator 216) can then be recirculated back to the pump 222 before again being delivered to the load 118. Additionally, or alternatively, the valve 228a can be operated to direct the flow of at least a portion of the cooled cooling medium to the reservoir 220, as discussed above. Additionally, or alternatively, the thermal management system 120 can instead have, or can include a refrigerant cooling system that can include a compressor and an evaporator, among other components. For example, Figure 4 illustrates another exemplary thermal management system 120' that includes a liquid based cooling system, as generally shown in Figure 3, as well as a refrigerant based cooling system.

Optionally, the thermal management system 120 can also include a heating circuit 226 having a heater 318, such as, for example, an electric heater, among others. The heating circuit 226 can be selectively utilized to elevate a temperature of the cooling medium to satisfy a threshold operating temperature. According to certain embodiments, one or more control flow valves 228b, 228c can be utilized to direct at least a portion of the cooling medium through the heating circuit 226 such that a temperature of the cooling medium can be elevated by operation of the heater 318.

Another example of a thermal management system 120' is shown in Figure 4. At least a portion of the thermal management system 120' can be similar to that discussed above with respect to the thermal management system 120 shown in Figure 3, including having a heater 318 (not shown in Figure 4). However, unlike the thermal management system 120 shown in Figure 3, the thermal management system shown in Figure 4 can further include a refrigerant coolant system. Thus, with respect to the example, shown in Figure 4, following the liquid cooling medium being heated by the transfer of heat from the load 118, the heated liquid cooling medium can flow to a second heat exchanger 322, or evaporator, wherein the heat entrained in the heated liquid cooling medium can be transferred to a refrigerant, thereby elevating the temperature of the refrigerant. The heated refrigerant can then be compressed by a compressor 324 before being supplied to the air side heat exchanger 122, which in this example is a condenser 320. Again, the impeller 124 can be operated to direct a flow or air across the air side heat exchanger 122 (e.g., the condenser 320 in this example) to reduce the temperature of the refrigerant. The cooled refrigerant that exits the condenser 320 can then flow through a filter or dryer 326 and an expansion valve 328 before again being recirculated to the second heat exchanger 322. The thermal management system 120' can also include one or more sensors, including, but not limited to, temperature and flow sensors, among other types of sensors, that can provide information regarding the characteristics of the refrigerant about one or more portions of the thermal management system 120'.

The thermal management system 120, 120' can also include one or more thermal management controllers 300 having at least one processor 302 and at least one memory device 304. The thermal management controller 300, processor(s) 302, and/or memory device(s) 304 that may, or may not, be dedicated to the operation of the thermal management system 120, 120', or components of the thermal management system 120, 120'. Thus, for example, according to certain embodiments, the processor 302 can comprise one or more processors, including compute circuits, that can be utilized to control operation of the thermal management system 120, 120', among other components of an associate cooling system, engine/motor, or vehicle. Therefore, according to certain embodiments, one thermal management controller 300, including one or more processors 302 of that thermal management controller 300, can be utilized to control the operation of at least the thermal management system 120, 120', or the corresponding components of the thermal management system 120, 120'. Alternatively, a plurality of thermal management controllers 300, or combinations of processors 302, including compute circuits, can be utilized to control operation of the thermal management system 120, 120', as well as control operations of different components of the heat pump system 102 and/or vehicle. Thus, for example, while certain embodiments herein may mention functions being performed by a thermal management controller 300, including the associated processor 302, such functions can be performed by a single controller or processor, or, alternatively, one or more functions can be performed by one or more controllers or processors, and one or more other functions can be performed by one or more other controllers or processors or combinations of controllers or processors.

The memory device 304 can have instructions stored therein that are executable by the processor 302 to cause the processor 302 to at least operate, including selectively activate and deactivate one or more components of the thermal management system 120, 120' that draw electrical power from a battery 119, including, but not limited to, the impeller 124, valves 228a-c, sensors 224a, 224b, and/or compressor 324, among other devices. The processor 302 can be embodied as, or otherwise include any type of processor, controller, or other compute circuit capable of performing various tasks such as compute functions and/or controlling the functions of at least the thermal management system 120, 120'. For example, the processor 302 can be embodied as a single or multi-core processor(s), a microcontroller, or other processor or processing/controlling circuit. In some embodiments, the processor 302 can be embodied as, include, or otherwise be coupled to an FPGA, an application specific integrated circuit (ASIC), reconfigurable hardware or hardware circuitry, or other specialized hardware to facilitate performance of the functions described herein. Additionally, in some embodiments, the processor 302 can be embodied as, or otherwise include a high-power processor, an accelerator co-processor, or a storage controller.

The memory device 304 can be embodied as any type of volatile (e.g., dynamic random-access memory (DRAM), etc.) or non-volatile memory capable of storing data therein. Volatile memory may be embodied as a storage medium that requires power to maintain the state of data stored by the medium. Non-limiting examples of volatile memory may include various types of random-access memory (RAM), such as dynamic random-access memory (DRAM) or static random-access memory (SRAM). One particular type of DRAM that may be used in a memory module is synchronous dynamic random-access memory (SDRAM).

In some embodiments, the memory device 304 can be embodied as a block addressable memory, such as those based on NAND or NOR technologies. The memory device 304 can also include future generation nonvolatile devices, such as a three-dimensional crosspoint memory device (*e.g.,* Intel 3D XPoint^{™} memory), or other byte addressable write-in-place nonvolatile memory devices. In some embodiments, the memory device 304 can be embodied as, or may otherwise include, chalcogenide glass, multi-threshold level NAND flash memory, NOR flash memory, single or multi-level Phase Change Memory (PCM), a resistive memory, nanowire memory, ferroelectric transistor random access memory (FeTRAM), antiferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device 304 can refer to the die itself and/or to a packaged memory product. In some embodiments, 3D crosspoint memory (e.g., Intel 3D XPoint^{™} memory) can comprise a transistor-less stackable cross point architecture in which memory cells sit at the intersection of word lines and bit lines and are individually addressable and in which bit storage is based on a change in bulk resistance.

As seen in at least Figure 3, the thermal management system 120, 120' can further include a ram air sensor 312 that can provide information regarding one or more characteristics of the ram air 130 that, when the gate 134 of the front vent 126 is at an at least partially open position, flows into the interior area 116 of the mobile charging unit 107. For example, the ram air sensor 312 can provide information regarding a flow rate, temperature, and/or quantity of ram air 130 that enters into the interior area 116. Additionally, or alternatively, the thermal management system 120, 120' can also include an air temperature sensor 316 that can provide information regarding an air temperature within the interior area 116.

According to certain embodiments, the thermal management system 120, 120' can include a wind vane sensor 314 that can be utilized with other information to determine, by the thermal management controller 300, an air flow vector of the ram air 130 that is entering into the interior area 116. According to certain embodiments, the air flow vector can be utilized in connection with operation of the gate 134 of at least the front vent 126, including, for example, the thermal management controller 300 generating one or more commands to actuate an actuator 310 in a manner that can move the gate 134 of the front vent 126, including one or more of the louvers, to a selected angular orientation. By moving the louvers to a selected orientation, the gate can, for example, adjust the flow of the ram air 130 flowing into the interior area 116 in a manner that can satisfy an airflow velocity threshold. Moreover, such an adjustment in the angular orientation of the louvers can adjust a degree of resistance provided against the incoming flow of the ram air 130. Such an adjustment in the resistance encountered by the incoming flow of ram air 130 can adjust the velocity of the flow of ram air 130 flowing into the interior area 116 to be within a preselected threshold, also referred to as an airflow velocity threshold.

As seen in at least Figure 3, operation of each of the ram air sensor 312, wind vane sensor 312, and air temperature sensor 316 can utilize electrical power that can, via operation of the thermal management controller 300, be selectively provided by the battery 119.

The thermal management system 120, 120' can further include a location system 306, such as, for example, a global positioning system (GPS), that is capable of providing a location of at least the towed vehicle 104. Further, changes in location information, as provided by the location system 306 over time can be utilized to determine a ground speed of the towed vehicle 104. Such ground speed information can be used by the thermal management controller 300 to determine, including estimate, a velocity of the ram air 130 that is at least entering into, and/or flowing through the interior area 116. Moreover, as generally indicated by at least Figures 1, 3, and 4, the air side heat exchanger 122 can be positioned generally adjacent to the front vent 126 such that a determine of the velocity of the ram air 130 that is at least entering into, and/or flowing through the interior area 116 can also provide an indication of the velocity, among other flow characteristics, of the ram air 116 that is flowing across the air side heat exchanger 122.

According to certain embodiments, the tow vehicle 104 can include a communication unit 308 that is communicatively coupled to a communication unit 214 of the vehicle 102. The communication units 214, 308 can be configured for wired and/or wireless communications between at least the vehicle 102 and the towed vehicle 104. Such wireless communications can occur using proprietary and/or non-proprietary wireless communication protocols, including, but not limited to, Wi-Fi, ZigBee, Bluetooth, radio, or near-field communications, among other communication protocols. According to certain embodiments, the communication units 214, 308 can each comprise a transceiver.

As seen in at least Figure 3, the vehicle 102 can include a vehicle controller 200 having at least one processor 202 and at least one memory device 204. The processor(s) 202 and memory device 204 can be similar, or have similar constructions, components, and/or circuitry to the processors and memory devices discussed above with respect to the processor(s) 302 and memory device 304 of the thermal management controller 300. Additionally, according to certain embodiments, the vehicle controller 200 can be utilized in lieu of the thermal management controller 300 for the operation of the thermal management system 120, 120', as discussed herein. Additionally, the vehicle 102 can further include a location system 208 that is similar to the location system 306 discussed above. According to certain embodiments, rather than having a location system 306 for the towed vehicle 104 and a location system 208 for the vehicle 102, one of the location system 208, 306 can provide location information that is provided to either, or both, the thermal management controller 308 and the vehicle controller 200. Further, in addition to, or in lieu of the thermal management controller 300 determining ground speed of the towed vehicle 104 via use of information provided by the location system 306, including GPS information, the ground speed can be determined using information, including velocity information, provided by, or derived from a speed sensor 210 of the vehicle 102. The vehicle 102 can further include a transmission sensor 212 that can provide information regarding which gear of a transmission system of the vehicle 102 is currently engaged, which can provide an indication for the thermal management controller 300 as to a movement status of the vehicle 102, and thus of the towed vehicle 104.

While embodiments discussed herein illustrate a towed vehicle 104 being towed via operation of a vehicle 102, and, moreover, by operation of a prime mover 206 of the vehicle 102, according to other embodiments, the thermal management system 120, 120' can be part of the vehicle 102. Further, for example, according to certain embodiments, the vehicle 102 can include the thermal management system 120, 120' as well as the charge port 140 for charging the batteries of other vehicles or equipment. According to such embodiments, redundancies relating to the above-mentioned components of both the towed vehicle 104 and the vehicle 102 can be reduced or minimized, if not eliminated.

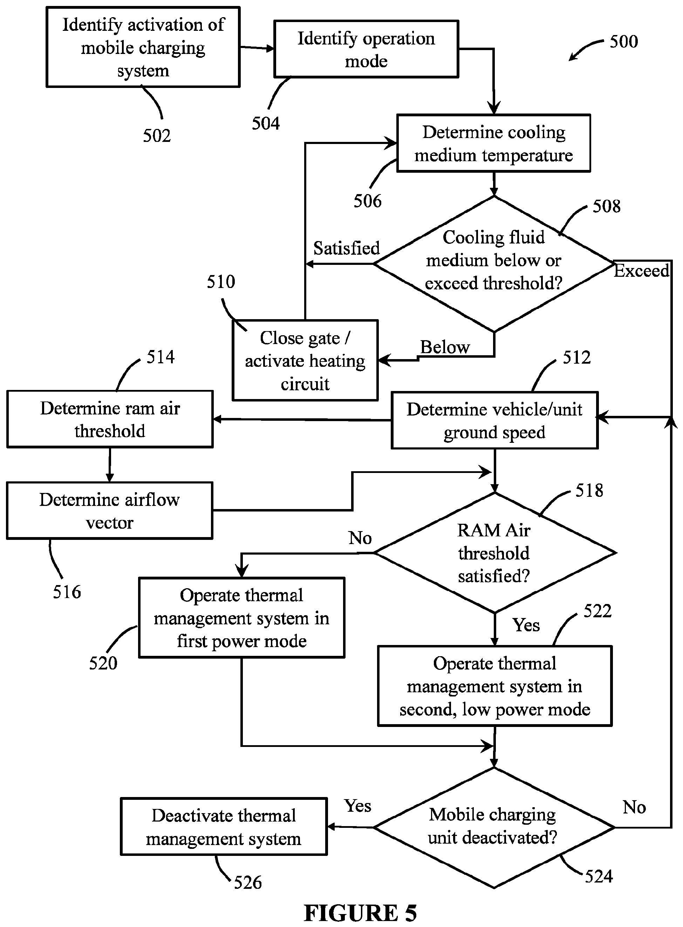

Figure 5 illustrates an exemplary method 500 for selectively controlling an operating of one or more components of a thermal management system 120, 120'. The method 500 is described below in the context of being carried out by the illustrated exemplary mobile charging system 100. However, it should be appreciated that method 500 can likewise be carried out by any of the other described implementations, as well as variations thereof. Further, the method 500 corresponds to, or is otherwise associated with, performance of the blocks described below in the illustrative sequence of Figure 5. It should be appreciated, however, that the method 500 can be performed in one or more sequences different from the illustrative sequence. Additionally, one or more of the blocks mentioned below may not be performed, and the method 500 can include steps or processes other than those discussed below.

At block 502, the thermal management controller 300, including, for example, the processor 302, can receive a signal(s) indicating the activation of the mobile charging system 100. This detection can result from information, including, for example, data, received by the thermal management controller 300 from various systems 206, 208, components, or sensors 210, 212, 312, 314, 316 of the mobile charging system 100. For example, the activation of the mobile charging system 100 can be identified based on a movement or travel of the mobile charging system 100. Additionally, the movement of the mobile charging system 100 can be detected through several methods, such as, for example, a transmission sensor 212 revealing a specific gear engagement, the operational speed of the prime mover, wheel speed, and ground speed information, which can be provided by the location system 208, 306 or a speed sensor 210. At block 504, the thermal management controller 300 can determine, including selecting from a plurality of operation modes, an operation mode of the thermal management system 120, 120'. These modes include an inactive mode where the battery 119 of the mobile charging unit 107 is neither being charged nor discharged and is not undergoing preconditioning for anticipated usage. This may occur, for example, in certain instances when the mobile charging system 100 is being transported to a job site for charging other vehicles or equipment. Another operation mode can include an active charging mode in which the mobile charging unit 107 is electrically coupled, through port 140, to a utility power supply to charge the battery 119. Alternatively, the thermal management system 120, 120' may be in an active discharging mode in which the battery 119 of the mobile charging unit 107 may be electrically coupled to another vehicle or equipment to supply electrical power for charging the battery of the other vehicle or equipment. The active discharging mode can occur while the mobile charging system 100 is stationary, or, alternatively, while the mobile charging system 100 is moving alongside the other vehicle or equipment. An active discharge transport mode is also available at least when the mobile charging unit 107 is charging another vehicle or piece of equipment while both are being towed, such as, for example, towed by the towed vehicle 104. Further, the operation mode can include an active preconditioning mode that can be configured to at least attempt to achieve an optimal battery temperature before use of the mobile charging unit 107, and moreover use of the battery 119, to charge the battery of another vehicle or equipment. Such an active preconditioning mode can, for example, include elevating the battery temperature, particularly when ambient temperatures are relatively low and the mobile charging unit 107 has been deactivated, or, alternatively, decreasing the temperature of the battery 119 while the mobile charging unit 107 is being transported to another job site after prior use.

At block 506, the thermal management controller 300 can determine the temperature of the cooling medium. The temperature determination can include detection of the temperature of the cooling medium using one or more temperature sensors 224a, 224b.

Using information from block 506, the thermal management controller 300 at block 508 can determined whether the temperature of the cooling fluid medium satisfies a predetermined threshold, which can include determining if the temperature of the cooling medium is below or exceeds the predetermined threshold. If the temperature of the cooling medium satisfies the predetermined threshold, as generally indicated by "Satisfied" in Figure 5, the method 500 can return to thermal management controller 300 continuing to monitor the temperature of the cooling medium at block 506. However, if the temperature is below the threshold, and assuming the inlet or front vent 126 is open, the thermal management controller 300 can generate a signal for the actuator 310 to close the corresponding gate 134. Additionally, or alternatively, if the temperature of the cooling medium remains below the threshold, the heating circuit 226 may be activated at block 510.

If the temperature of the cooling medium surpasses the predetermined threshold, the thermal management controller 300 can, at block 510, determine the current ground travel speed of the mobile charging system 100. This can include the ground speed of either or both the vehicle 102 and the towed vehicle 104. As mentioned earlier, the ground travel speed can be determined in a variety of manners, such as, for example, by utilizing information from the location system 208, 308, or a speed sensor 210, among others.

At block 514, the thermal management controller 300 can determine one or more ram air thresholds, including, for example, a preset temperature for the ram air 130 that is to flow through the front or inlet vent 126 and/or a ground travel speed threshold. For instance, the temperature of the ram air 130 that is to flow through the inlet vent 126 can, according to certain embodiments, be generally presumed to be the same as, or similar to, the ambient air temperature, as detected by one or more systems of the vehicle 102 and the towed vehicle 104. Additionally, or alternatively, such temperature information can be provided by the ram air sensor 312, which can be positioned within or outside of the interior area 116 of the towed vehicle 104. During specific seasons, or in certain environments, the ambient air temperature can drop below a preset temperature, which can be dynamically adjusted based on various criteria. Moreover, at certain relatively low temperatures, the ambient or ram air temperature can adversely impact the performance of the battery 119, including with respect to energy output. Therefore, according to certain embodiments, at block 514, the thermal management controller 300 can determine if the ambient temperature is above, or satisfies, the preset temperature.

Additionally, the thermal management controller 300 can predetermine a threshold ground travel speed at which the mobile charging system 100 or portions thereof, including the vehicle 102 and/or the towed vehicle 104, are to be traveling in order for the system 100 to utilize ram air 130 instead of, or in addition to, the operation of the impeller 124 to circulate airflow across the air side heat exchanger 122. If the ground travel speed, as determined at block 512, does not satisfy the predetermined ground travel speed threshold, then the velocity and/or amount of ram air 130 directed to the air side heat exchanger can be deemed insufficient to cool the air side heat exchanger to the desired levels. Moreover, if the vehicle 102 and towed vehicle 104 are not moving at sufficient ground travel speeds, the ram air 130 may be inadequate, at least by itself, to transfer heat from the air side heat exchanger in a manner that can adequately cool the cooling medium to certain desired temperatures. In such situations, the front vent 126 gate 134 can be closed to inhibit ram air 130 flow from adversely impacting the fuel usage or fuel economy of the system 100.

The ram air threshold could be determined by a combination of factors or parameters, including, for example, two or more of ground travel speed, ambient or ram air temperature, an airflow vector, and an airflow velocity threshold, among other factors or parameters. Additionally, one or more, if not all, of such parameters can be dynamically adjustable by at least the thermal management controller 300.

One or more models, including algorithms, can be used to in connection with determining one or more of the ram air thresholds, and, moreover, whether the ram air 130 that will be delivered is sufficient with respect to the transfer of heat from the air side heat exchanger to the ram air 130. Factors that may be considered by the model can include, for example, a speed or velocity of the ram air 130, a direction of the ram air 130, and a temperature of the ram air 130 at least as the ram air 130 enters into and area around the mobile charging unit 107, including, for example, an interior area 106 of the towed vehicle 104 at which the mobile charging unit 107 is positioned.

Optionally, at block 516, the thermal management controller 300 can determine an air flow vector for the ram air 130. Determining the air flow vector for the ram air 130 can be used by the thermal management controller 300 to determine whether, if ram air 130 is flowing, or is to flow, through the front or inlet vent 126, the corresponding gate 134 is to be adjusted, and if so, the extent of the adjustment, so that the velocity of the incoming flow of ram air 130 satisfies the airflow velocity threshold, as discussed above and which can also be determined at block 514. Additionally, according to certain embodiments, when ram air 130 is flowing through the gate 134 of the front or inlet vent 126, the thermal management controller 300 can generally continuously monitor the airflow velocity threshold and facilitate corresponding adjustments, if any, in the position of the gate 134.

At block 518, thermal management controller 300 determines whether the incoming ram air 130 satisfies the ram air threshold(s) based on at least the factors or parameters identified at block 514.

At block 520, if the ram air threshold is determined by the thermal management controller 300 to not be satisfied, the thermal management system 120, 120' can operate in a first, high power mode. **In** the first, high power mode, the thermal management controller 300 may, in addition to or instead of using ram air 130, generate a command to operate the impeller 124 such that the impeller 124 facilitates a flow of air across the air side heat exchanger to the transfer of heat from the air side heat exchanger to the passing air, thereby cooling the cooling medium. However, such operation of the impeller in the first, high power mode, can consume power from the battery 119.

Conversely, at block 522, if the ram air threshold is determined by the thermal management controller 300 to be satisfied, the thermal management system 120, 120' can operate in a second, low power mode. In the second, low power mode, the impeller is not operated, thereby conserving electrical power of the battery 119. Instead, ram air 130 is used for the transfer of heat from the air side heat exchanger so as to cool the cooling medium.

The thermal management controller 300 can be configured to generally continuously monitor whether the ram air threshold is being satisfied. Thus, for example, while the thermal management system 120, 120' can operate in either the first or second power mode for at least a certain duration, changes with respect to whether the ram air threshold is satisfied can reevaluated in a manner similar to that discussed above with respect to at least blocks 502-518. A determination(s) can therefore be made as to whether to switch from the first power mode to the second power mode, and vice versa. Consequently, the power mode utilized by the thermal management system 120, 120' can be dynamically adjusted as at least the ram air threshold(s) is/are generally continuously examined by the thermal management controller 300 to determine whether the ram air 130 is satisfying the ram air threshold.

The thermal management controller 300 can also be configured to determine whether to temporarily stop operation of the thermal management system 120, 120' when the thermal management system 120, 120' is operating in at least the second, low power mode. Such at least temporary suspension of the thermal management system 120, 120' can be based on one or more circumstances including, for example, an activation or travel status of the mobile charging system 100. For example, in some instances, while the thermal management system 120, 120' is operating in the second, low power mode, the movement or travel of the mobile charging system 100 can temporarily be stopped, such as when the mobile charging system 100 is stopped by a traffic signal. In such situations, the at least temporary change in travel status of the mobile charging system 100 can result in at least a temporary deactivation or stoppage of the thermal management system 120, 120' in at least an attempt to reduce consumption of electrical power from the battery 119 by the thermal management system 120, 120'. For example, such temporary stoppage in operation of the thermal management system 120, 120' can include stoppage in operation of one or more pumps 222, compressors 324, or condensers 320. Additionally, the thermal management system 120, 120' can include overrides that can reactivate the thermal management system 120, 120' if the temperature of the cooling medium temperature, battery 119, or other load 118 exceeds a predetermined thresholds so as to reduce, minimize, inhibit, or prevent damage to one or more components or loads of the system. Upon the thermal management controller 300 detecting the travel status of the mobile charging system 100 has returned to moving, and/or the predetermined ground travel speed has again been satisfied, the thermal management system 120, 120' may be reactivated to operate in the second, low power mode.

Further, if the temperature of the battery 119 requires preconditioning or thermal conditioning during transport, the thermal management system 120, 120' may operate in the second low power mode so as to utilize ram air 130 to conserve electrical power stored in the battery 119. This conservation strategy is beneficial, as at the job site, the thermal management system 120, 120' may on the operation of the thermal management system 120, 120' in the first, high power mode, in which power is consumed from the battery 119 by operation of the impeller in connection with transferring heat from the air side heat exchanger. After leaving a job site, if and upon the ram air threshold(s) being satisfied, the thermal management system 120, 120' can again conserve power of the battery 119 by again operating in the second, low power mode.

At block 524, the thermal management controller 300 can determine if the mobile charging unit 107 is deactivated, such as, for example, by using information from the transmission sensor 212 indicating the transmission system is in a gear associated with the vehicle 102 being parked, the prime mover 206 has been deactivated or turned off, and/or the location system 306 indicates movement of the mobile charging system 100 has stopped. If the mobile charging unit 107 remains activated, then the method 500 can return to block 508, wherein the temperature of the cooling medium can continue to be monitored. Otherwise, at block 526, the thermal management system 120, 120' can be deactivated.

## Claims

1. A mobile charging system (100) having a thermal management system (120, 120'), the mobile charging system (100) further comprising:
a location system (208);
a battery (119) and a heat exchanger (122) of the thermal management system (120, 120'), the heat exchanger (122) being positioned on a towed vehicle of the mobile charging system (100);
at least one processor (302); and
a memory (304) coupled with the processor (302), the memory (304) including instructions that when executed by the processor (302) cause the mobile charging system (100) to:
determine whether a ground travel speed of the mobile charging system (100), as determined using at least information provided by the location system (208), satisfies a predetermined ground travel speed threshold;
generate a signal to facilitate an operation, based at least on the ground travel speed not satisfying the predetermined ground travel speed threshold, of the thermal management system (120, 120') in a first, high power mode at which at least an impeller (124) of the thermal management system (120, 120') is operated using an electrical power provided by the battery (119) of the mobile charging system (100) to control a temperature of at least the heat exchanger (122); and
generate a signal to facilitate an operation, based at least on the ground travel speed satisfying the predetermined ground travel speed threshold, of the thermal management system (120, 120') in a second, low power mode at which at least the impeller (124) is not operated using the electrical power provided by the battery (119) and wherein the temperature of at least the heat exchanger (122) is controlled using at least a flow of a ram air across the heat exchanger (122).

2. The mobile charging system (100) of claim 1, wherein the memory (304) further includes instructions that when executed by the processor (302) cause the system to determine the ground travel speed using information provided by at least a location system (208).

3. The mobile charging system (100) of claim 1 or 2, wherein the location system (208) is a global satellite positioning system.

4. The mobile charging system (100) of one of the claims 1 to 3, wherein the memory (304) further includes instructions that when executed by the processor (302) cause the system to further determine whether a temperature of an ambient air or the ram air satisfies a predetermined temperature threshold, and wherein the determination to operate in the second, low power mode is further comprises the determination that the temperature of the ambient air or the ram air satisfies the predetermined temperature threshold.

5. The mobile charging system (100) of one of the claims 1 to 4, wherein the memory (304) further includes instructions that when executed by the processor (302) cause the system to generate a signal to open at least a front vent (126) of the thermal management system (120, 120') in response to the ground travel speed being determined to satisfy the predetermined ground travel speed threshold, the front vent (126) being configured to control the flow of the ram air into an interior area of the mobile charging system (100) at which the heat exchanger (122) is positioned.

6. The mobile charging system (100) of one of the claims 1 to 5, wherein the memory (304) further includes instructions that when executed by the processor (302) cause the system to:
determine an airflow velocity of the ram air, and
determine a position of a gate (134) of the front vent (126) based at least in part on the airflow velocity.

7. The mobile charging system (100) of one of the claims 1 to 6, wherein the memory (304) further includes instructions that when executed by the processor (302) cause the system to generate one or more signals:
temporarily suspend operation of the thermal management system (120, 120') in the second, low power mode in response to a detection of the mobile charging system (100) being changed from a travel state to a non-travel state;
activate, while operation of the thermal management system (120, 120') is being temporarily suspended, the impeller (124) in response to a temperature of the thermal management system (120, 120') exceeding a predetermined temperature threshold; and reactivate operation of the thermal management system (120, 120') in the second, low power mode in response to a detection of the mobile charging system (100) returning to the travel state, wherein reactivation of operation of the thermal management system (120, 120') in the second, low power mode includes the impeller (124), if activated, being deactivated.

8. A method (500) for selectively controlling a thermal management system (120, 120') of a mobile charging system (100), the method (500) comprising a mobile charging system of one of the claims 1 to 7 and further:
determining (512) the ground travel speed of the mobile charging system (100) satisfies the predetermined ground travel speed threshold;
operating (520), based at least on the ground travel speed not satisfying the predetermined ground travel speed threshold, the thermal management system (120, 120') in the first, high power mode at which at least the impeller (124) of the thermal management system (120, 120') is operated using the electrical power provided by the battery (119) of the mobile charging system (100) to facilitate the cooling of the temperature of an air side heat exchanger (122); and
operating (522), based at least on the ground travel speed satisfying the predetermined ground travel speed threshold, the thermal management system (120, 120') in the second, low power mode at which at least the impeller (124) is not operated using the electrical power provided by the battery (119) and wherein the temperature of the air side heat exchanger (122) is controlled using at least the flow of the ram air across the air side heat exchanger (122).

9. The method (500) of claim 8, further comprising determining the ground travel speed using information provided by the location system (208).

10. The method (500) of claim 8 or 9, wherein the location system (208) is a global satellite positioning system.

11. The method (500) of one of the claims 8 to 10, wherein operating the thermal management system (120, 120') in the second, low power mode further comprises determining the temperature of an ambient air or the ram air satisfies a predetermined temperature threshold.

12. The method (500) of one of the claims 1 to 11, further comprising opening at least the front vent (126) of the thermal management system (120, 120') in response to the determining the ground travel speed satisfies the predetermined ground travel speed threshold, the front vent (126) being configured to control the flow of the ram air into the interior area of the mobile charging system (100) at which the air side heat exchanger (122) is positioned.

13. The method (500) of one of the claims 8 to 12, further comprising determining the airflow velocity of the ram air, and wherein the opening the front vent (126) comprises determining the position of the gate (134) of the front vent (126) based at least in part on the airflow velocity.

14. The method (500) of one of the claims 8 to 13, further comprising:
temporarily suspending operation of the thermal management system (120, 120') in the second, low power mode in response to the detection of the mobile charging system (100) being changed from the travel state to the non-travel state;
activating, while operation of the thermal management system (120, 120') is being temporarily suspended, the impeller (124) in response to the temperature of the thermal management system (120, 120') exceeding the predetermined temperature threshold; and
reactivating operation of the thermal management system (120, 120') in the second, low power mode in response to the detection of the mobile charging system (100) returning to the travel state, wherein reactivation of operation of the thermal management system (120, 120') in the second, low power mode includes the impeller (124), if activated, being deactivated.

15. A method (500) of one of the claims 8 to 14, further comprising:
determining (518) whether the ram air satisfies at least one predetermined ram air threshold;
operating, based at least on the ram air not satisfying the predetermined ram air threshold, the thermal management system (120, 120') in the first, high power mode; and
operating, based at least on the ram air satisfying the predetermined ram air threshold, the thermal management system (120, 120') in the second, low power mode.
